# EUROPEAN PATENT APPLICATION

(11) **EP 3 345 933 A1**
(43) Date of publication of application: **11.07.2018**
(21) Application number: 16841043.9
(22) Date of filing: 01.08.2016
(51) Int. Cl.: C08C 19/00, C08J 3/20, C08L 15/00

(54) **METHOD FOR PRODUCING MODIFIED DIENE RUBBER, RUBBER COMPOSITION, AND TIRE**

(30) Priority: 31.08.2015 JP 2015171242
(71) Applicant: Bridgestone Corporation, Tokyo 104-8340 (JP)
(72) Inventor: UCHIYAMA, Toshihiro, Tokyo 104-8340 (JP); KONDO, Hajime, Tokyo 104-8340 (JP); OZAWA, Yoichi, Tokyo 104-8340 (JP)
(74) Representative: Oxley, Robin John George
(86) International application number: PCT/JP2016/003537
(87) International publication number: WO 2017/038001

(57) **Abstract**

Provided is a method capable of efficiently producing a modified diene-based rubber, and a rubber composition and a tire with excellent low hysteresis loss property, durability, etc. The method for producing a modified diene-based rubber of this disclosure comprises: performing modification by adding a modifier into a solution of a diene-based rubber as raw material obtained by dissolving a diene-based rubber as raw material in a solvent, and removing the solvent and reacting the modifier with the diene-based rubber as raw material while exerting a mechanical shear force, to thereby generate a modified diene-based rubber. The rubber composition of this disclosure uses a modified diene-based rubber produced with the method for producing a modified diene-based rubber of this disclosure. The tire of this disclosure uses the rubber composition of this disclosure.

## Description

### TECHNICAL FIELD

This disclosure relates to a method for producing a modified diene-based rubber, a rubber composition and a tire.

### BACKGROUND

Recently, requirement to low fuel consumption of automobile is growing, and a tire with low rolling resistance is desired. Therefore, as a rubber composition used in a tread, etc. of a tire, a rubber composition with low tan*δ* (hereinafter referred to as the low hysteresis loss property) and excellent low heat generating property is desired. Moreover, from the viewpoint of safety and economy, a rubber composition for tire is required to have excellent durability.

Regarding this, in order to improve the low hysteresis loss property and the durability of a rubber composition with a reinforcing filler such as carbon black, silica and the like compounded to a rubber component, it is effective to improve an affinity of the reinforcing filler and the rubber component in the rubber composition.

For example, in order to improve the affinity of the reinforcing filler and the rubber component in the rubber composition, a synthetic diene-based rubber with its affinity with a reinforcing filler improved via terminal modification, a synthetic diene-based rubber with its affinity with a reinforcing filler improved by copolymerizing with a functional group-containing monomer, etc. are developed as the rubber component.

Moreover, examples of techniques modifying a natural rubber as a natural diene-based rubber include JP H05-287121 A (PTL1), which discloses a technique compounding an α,β-unsaturated carboxylic acid ester of a polyhydric alcohol and another vinyl monomer to a natural rubber latex and performing emulsion polymerization, to thereby produce a modified natural rubber latex in which the monomer is grafted to the natural rubber molecules; and JP 2011-17013 A (PTL 2), which discloses a technique adding, by exerting a mechanical shear force, an alkoxy silyl group-containing mercapto compound to a natural rubber raw material selected from a solid natural rubber, a coagulated natural rubber latex or a natural rubber cup lump, to thereby produce a modified natural rubber.

### CITATION LIST

### Patent Literature

PTL1: JP H05-287121 A
PTL2: JP 2011-17013 A

### SUMMARY

### (Technical Problem)

However, in the case of modifying a synthetic diene-based rubber, after the modified synthetic diene-based rubber is synthesized, steam desolventization, filtration and drying are necessary, which increases the number of process.

On the other hand, in the case of modifying a natural rubber latex, after performing modification reaction to the natural rubber latex, coagulation of the modified natural rubber latex and filtration, drying of the coagulated product are necessary, which increases the number of process as well.

Moreover, since the natural rubber latex is an emulsion, merely surfaces of cores composed of natural rubber molecules are modified, and after the modification process, merely core-shell type modified natural rubber particles, which are composed of cores composed of unmodified natural rubber molecules and layers of modified natural rubber molecules covering the cores, can be obtained, which disables uniform and efficient modification of the natural rubber molecules.

Moreover, in the case of using a solid natural rubber, a coagulated natural rubber latex or a natural rubber cup lump as a raw material, merely a surface of the raw material exposed due to exertion of the mechanical shear force, which disables uniform and efficient modification of the entire natural rubber molecules.

Therefore, there is still room for improving the affinity with a reinforcing filler of a modified natural rubber obtained by modifying a natural rubber latex, a solid natural rubber, a coagulated natural rubber latex or a natural rubber cup lump, and there is still room for improving the low hysteresis loss property, the durability, etc. of a rubber composition using such modified natural rubber.

Then, this disclosure aims to solve the aforementioned problem of the conventional techniques, and to provide a method for producing a modified diene-based rubber capable of efficiently producing a modified diene-based rubber, and capable of producing a modified diene-based rubber capable of improving the low hysteresis loss property, the durability, etc. of a rubber composition when compounded to the rubber composition.

Moreover, this disclosure aims to further provide a rubber composition and a tire with excellent low hysteresis loss property, durability, etc.

### (Solution to Problem)

A summary of this disclosure for solving the aforementioned problem is as follows.

The method for producing a modified diene-based rubber of this disclosure comprises: performing modification by adding a modifier into a solution of a diene-based rubber as raw material obtained by dissolving a diene-based rubber as raw material in a solvent, and removing the solvent and reacting the modifier with the diene-based rubber as raw material while exerting a mechanical shear force, to thereby generate a modified diene-based rubber.

Such method for producing a modified diene-based rubber of this disclosure is capable of efficiently producing a modified diene-based rubber. Moreover, by using a modified diene-based rubber produced with the method for producing a modified diene-based rubber of this disclosure, it is possible to improve the low hysteresis loss property, the durability, etc. of a rubber composition.

Here, in this disclosure, the modifier added into the solution of the diene-based rubber as raw material may be either added into the solution of the diene-based rubber as raw material, by the modifier itself, or added into the solution of the diene-based rubber as raw material, as a modifier solution obtained by dissolving the modifier in a solvent. Note that in the case where the modifier is solid, it is preferable that the modifier is added into the solution of the diene-based rubber as raw material, as a modifier solution obtained by dissolving the modifier in a solvent.

In the method for producing a modified diene based-rubber of this disclosure, it is preferable that the diene-based rubber as raw material has a gel amount of 35 mass% or less. In this case, it is possible to improve a modification efficiency of the diene-based rubber as raw material due to the modifier.

Note that in this disclosure, the gel amount of the diene-based rubber as raw material is obtained by swelling the diene-based rubber as raw material with toluene for 12 hours, treating the same with a centrifuge at 35,000 rpm for 1.5 hours, leave standing and drying a precipitated gel for 48 hours, weighing to determine the gel amount, and calculating its percentage with respect to an amount of the used diene-based rubber as raw material.

In the method for producing a modified diene-based rubber of this disclosure, it is preferable that the diene-based rubber as raw material has a content of a high molecular weight component with a molecular weight of 5,000,000 or more measured with a field flow fractionation (FFF) analyzer of 15 mass% or less. In this case, during the modification, a load when exerting the mechanical shear force is reduced.

Note that in this disclosure, the measurement of the high molecular weight component with a field flow fractionation (FFF) analyzer is performed with a method as disclosed in JP 2012-122796 A and JP 2013-221069 A.

Specifically, the diene-based rubber as raw material as an analysis target is dissolved in tetrahydrofuran (THF), to prepare a THF solution with a concentration of the diene-based rubber as raw material of 0.4 mass%, and the THF solution is subjected to centrifugal separation at a centrifugal acceleration of 150,000 G, to separate a soluble component and an insoluble component in the solution. Next, a supernatant liquid containing the soluble component is collected, diluted 2 times with THF, and its content of high molecular weight component with a molecular weight of 5,000,000 or more is measured with an FFF analyzer as a molecular weight fractionation device, and an MALS detector as a molecular weight and branching detector.

In the method for producing a modified diene-based rubber of this disclosure, it is preferable that the diene-based rubber as raw material has a Z-average molecular weight, Mz, of 3,500,000 or less. In this case, during the modification, the load when exerting the mechanical shear force is reduced.

Note that in this disclosure, the Z-average molecular weight (Mz) is a value measured via gel permeation chromatography (GPC), in terms of polystyrene.

In the method for producing a modified diene-based rubber of this disclosure, it is preferable that the diene-based rubber as raw material contains an acetone-extractable content of 15 mass% or less. In this case, it is possible to efficiently perform desired modification reaction of the diene-based rubber as raw material. Here, the "acetone-extractable content" refers to a content of a component extractable with acetone in the diene-based rubber as raw material.

In the method for producing a modified diene-based rubber of this disclosure, it is preferable that the diene-based rubber as raw material contains a solvent-insoluble content of 45 mass% or less. In this case, it is possible to efficiently perform desired modification reaction of the diene-based rubber as raw material. Here, the "solvent-insoluble content" refers to a content of a residue component unextractable with toluene in the diene-based rubber as raw material.

In the method for producing a modified diene-based rubber of this disclosure, it is preferable that the solvent is a hydrocarbon. In this case, it is possible to improve the modification efficiency of the diene-based rubber as raw material due to the modifier.

In the method for producing a modified diene-based rubber of this disclosure, it is preferable that in the modification, a degree of vacuum upon termination of the modification is 400 mmHg or more. In this case, a removal ratio of the solvent is raised.

In the method for producing a modified diene-based rubber of this disclosure, it is preferable that in the modification, deaeration of 25 mass% or more of the solvent is performed between a time point after expiration of 50% of a total time from initiation of the modification and a time point at which the modification terminates. In this case, it is possible to improve the modification efficiency of the diene-based rubber as raw material due to the modifier.

It is preferable that a conversion ratio of the modifier at the time point after expiration of 50% of the total time from initiation of the modification is 75% or more. In this case, it is possible to improve the modification efficiency of the diene-based rubber as raw material due to the modifier.

In the method for producing a modified diene-based rubber of this disclosure, it is preferable that the modified diene-based rubber has a content of water of 1.5 mass% or less and a content of the solvent of 0.5 mass% or less. In this case, the modified diene-based rubber can be used in production of a rubber composition without devolatilization, etc.

In the method for producing a modified diene-based rubber of this disclosure, it is preferable that the modified diene-based rubber has a content of a portion derived from the modifier of 0.01 to 5 mass%. In this case, it is possible to maintain the properties of the diene-based rubber as raw material while sufficiently improving the affinity with a reinforcing filler of the modified diene-based rubber.

In the method for producing a modified diene-based rubber of this disclosure, it is preferable that the diene-based rubber as raw material is a polyisoprene rubber. In this case, the produced modified diene-based rubber has wide usage and high demand.

Here, it is preferable that the polyisoprene rubber as the diene-based rubber as raw material is a substitute natural rubber. Note that in this disclosure, the "substitute natural rubber" refers to a natural rubber other than natural rubbers derived from Para rubber tree (Hevea brasiliensis). In this case, even if a natural rubber derived from Para rubber tree is difficult to obtain, the modified natural rubber can be produced by using a substitute natural rubber.

Moreover, it is preferable that the substitute natural rubber as the diene-based rubber as raw material is a natural rubber derived from guayule. In this case, it is possible to produce a modified diene-based rubber with excellent processability and excellent heat aging resistance.

In the method for producing a modified diene-based rubber of this disclosure, it is preferable that the modifier is a modifier unreactive with the solvent. In this case, it is possible to improve the modification efficiency of the diene-based rubber as raw material.

The rubber composition of this disclosure uses a modified diene-based rubber produced with the aforementioned method for producing a modified diene-based rubber. Such rubber composition of this disclosure has excellent low hysteresis loss property, durability, etc.

The tire of this disclosure uses the aforementioned rubber composition. Such tire of this disclosure has excellent low hysteresis loss property, durability, etc.

### (Advantageous Effect)

According to this disclosure, it is possible to provide a method for producing a modified diene-based rubber capable of efficiently producing a modified diene-based rubber, and capable of producing a modified diene-based rubber capable of improving the low hysteresis loss property, the durability, etc. of a rubber composition when compounded to the rubber composition.

Moreover, according to this disclosure, it is possible to provide a rubber composition and a tire having excellent low hysteresis loss property, durability, etc.

### BRIEF DESCRIPTION OF THE DRAWINGS

FIG. 1 illustrates a schematic view of a twin screw extruder which can be used in the method for producing a modified diene-based rubber according to one embodiment of this disclosure; and
FIG. 2 illustrates a schematic view of another twin screw extruder which can be used in the method for producing a modified diene-based rubber according to another embodiment of this disclosure.

### DETAILED DESCRIPTION

Hereinafter, the method for producing a modified diene-based rubber, the rubber composition and the tire of this disclosure are described in detail based on its embodiments.

### <Method for producing modified diene-based rubber>

The method for producing a modified diene-based rubber of this disclosure comprises: performing modification by adding a modifier into a solution of a diene-based rubber as raw material obtained by dissolving a diene-based rubber as raw material in a solvent, and removing the solvent and reacting the modifier with the diene-based rubber as raw material while exerting a mechanical shear force, to thereby generate a modified diene-based rubber.

In the method for producing a modified diene-based rubber of this disclosure, since modification is performed with the modifier in a state where the diene-based rubber as raw material is dissolved in the solvent, the modification efficiency is raised, and imbalance of modification can be suppressed.

Note that as mentioned above, for example, in the case of modifying a latex of a natural rubber or a synthetic diene-based rubber, merely the surface of the core composed of rubber molecules is modified, and after the modification, merely a core-shell type modified rubber, which is composed of a core composed of unmodified rubber molecules and a layer of modified rubber molecules covering the core, can be obtained, which disables uniform and efficient modification of the rubber molecules. Regarding this, in this disclosure, since the diene-based rubber as raw material is dissolved in a solvent so as to become a solution, and the diene-based rubber does not form microparticles in the solution, the modification reaction due to the modifier is caused uniformly on the each entire diene-based rubber molecule. Moreover, since the solution has more reactive moistures (reactive sites) as compared to the latex, the modification reaction can proceed more efficiently.

Moreover, in the method for producing a modified diene-based rubber of this disclosure, by exerting a mechanical shear force, it is possible to simultaneously efficiently modify the diene-based rubber as raw material with the modifier and remove the solvent. Therefore, there is no necessity to remove the solvent singly, which reduces the number of process.

From these viewpoints, according to the method for producing modified diene-based rubber of this disclosure, it is possible to efficiently modify a diene-based rubber as raw material and to efficiently produce a modified diene-based rubber. Moreover, a modified diene-based rubber produced with the method for producing a modified diene-based rubber of this disclosure is modified uniformly across the entire rubber, and thus has high affinity with a reinforcing filler. By compounding the modified diene-based rubber to a rubber composition, it is possible to improve the low hysteresis loss property, the durability, etc. of the rubber composition.

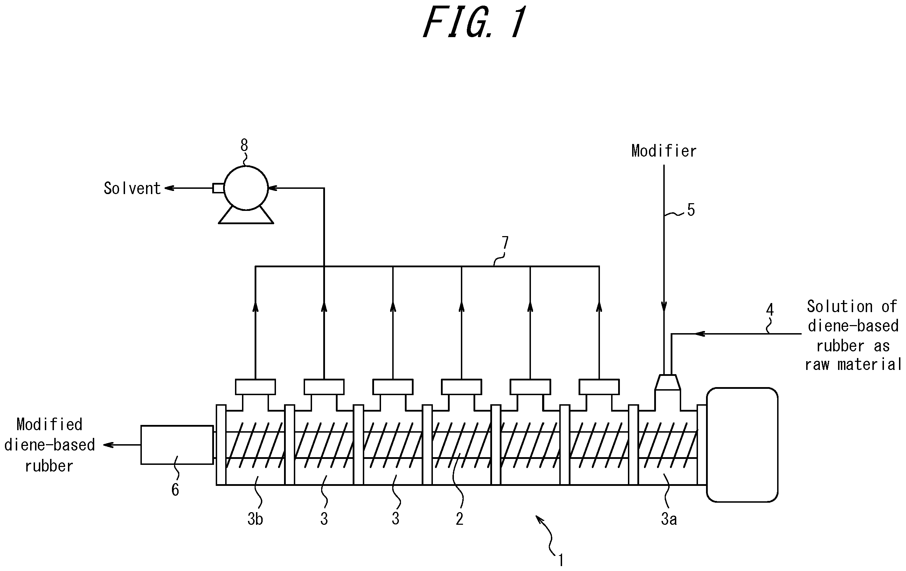

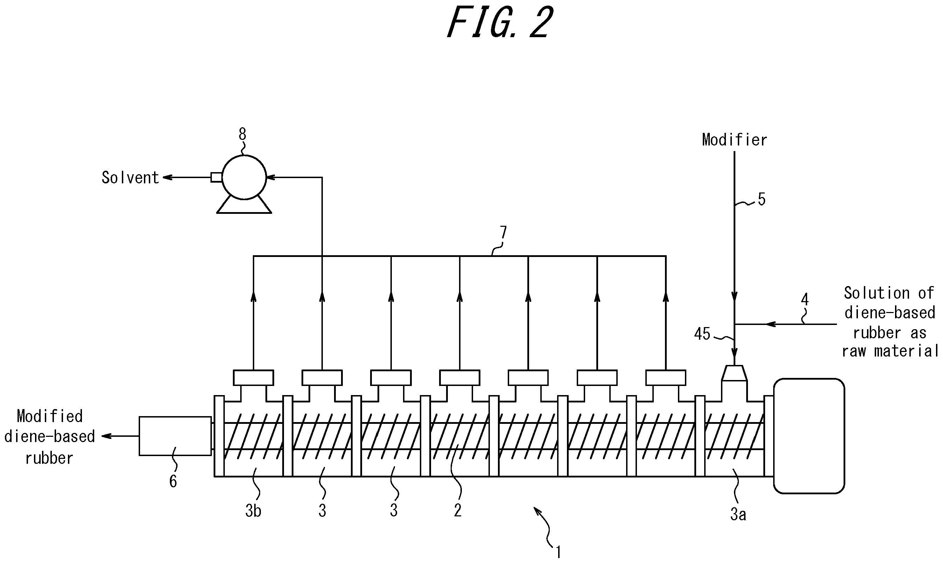

For exerting the mechanical shear force to remove the solvent, for examples, a multi screw extruder may be used, and a twin screw extruder is preferably used. FIG. 1 illustrates a schematic view of a twin screw extruder which can be used in the method for producing a modified diene-based rubber according to one embodiment of this disclosure, and FIG. 2 illustrates a schematic view of another twin screw extruder which can be used in the method for producing a modified diene-based rubber according to another embodiment of this disclosure.

Each of the twin screw extruders 1 in FIG. 1 and FIG. 2 includes two screws 2 and a plurality of barrels 3 with the screws 2 incorporated therein.

An injection line 4 for the solution of the diene-based rubber as raw material and an injection line 5 for the modifier are connected to one barrel 3a among the plurality of barrels 3 in FIG. 1, and an outlet 6 for the generated modified diene-based rubber is connected to another barrel 3b among the plurality of barrels 3. Note that although the injection line 4 for the solution of the diene-based rubber as raw material and the injection line 5 for the modifier are connected to the first barrel 3a from the right in FIG. 1, the injection lines 4, 5 may be connected to another barrel as well.

Moreover, although the injection line 4 for the solution of the diene-based rubber as raw material and the injection line 5 for the modifier are separately connected to the first barrel 3a in FIG. 1, the injection line 4 for the solution of the diene-based rubber as raw material and the injection line 5 for the modifier may be directly connected, so as to form an injection line 45 for a mixture of the solution of the diene-based rubber as raw material and the modifier connected to the barrel 3a with a connecting portion thereof as a base point, as illustrated in FIG. 2. In this case, it is possible to preliminarily react the diene-based rubber as raw material and the modifier, and then inject the same into the barrels.

Moreover, although the outlet 6 for modified diene-based rubber is connected to the barrel 3b on a leftmost side in each of FIG. 1 and FIG. 2, the outlet 6 may be connected to another barrel as well. Moreover, although the twin screw extruder 1 as illustrated in FIG. 1 or FIG. 2 has seven or eight barrels, the number of barrels is not limited thereto. Note that each barrel 3 may be adjusted to a desired temperature, and may be adjusted to a temperature appropriate for the modification reaction.

Moreover, although not illustrated in FIG. 1 and FIG. 2, an injection line for moisture may be disposed on the twin screw extruder so as to allow injection of moisture into the twin screw extruder through the injection line, to thereby accelerate removal of the solvent by injecting moisture into the twin screw extruder.

In FIG. 1 and FIG. 2, a plurality of solvent devolatilizing lines 7 for devolatilizing the solvent are connected to the barrels 3 other than the barrel 3a to which the injection lines 4, 5, 45 are connected. Each of the solvent devolatilizing lines 7 is connected to a vacuum pump 8 so as to bring the removed solvent to the outside via the vacuum pump 8. Here, the removed solvent may be reused in preparation of the solution of the diene-based rubber as raw material.

The multi screw extruder may be a commercially available one, for example, a twin screw extruder manufactured by Japan Steel Works, Ltd. Moreover, the torque, the screw rate, etc. of the extruder may be selected as appropriate depending on the type of the selected diene-based rubber as raw material, the viscosity of the solution of the diene-based rubber as raw material, etc.

The diene-based rubber as raw material may be either a natural one [i.e., a natural rubber (NR)] or a synthetic one.

Here, examples of the synthetic diene-based rubber include homopolymers and copolymers of conjugated diene compounds, and copolymers of conjugated diene compounds and aromatic vinyl compounds. Examples of the conjugated diene compound used in synthesis of the synthetic diene-based rubber include 1,3-butadiene, isoprene, 1,3-pentadiene, 2,3-dimethylbutadiene, 2-phenyl-1,3-butadiene and 1,3-hexadiene. Moreover, examples of the aromatic vinyl compound include styrene, α-methyl styrene, 1-vinyl naphthalene, 3-vinyltoluene, ethylvinylbenzene, divinylbenzene, 4-cyclohexylstyrene and 2,4,6-trimethylstyrene.

Moreover, specific examples of the homopolymers of conjugated diene compounds include a polybutadiene rubber (BR) and a synthetic polyisoprene rubber (IR). Specific example of the copolymers of conjugated diene compounds include a butadiene-isoprene copolymer rubber. Specific example of the copolymers of conjugated diene compounds and aromatic vinyl compounds include a styrene-butadiene copolymer rubber (SBR) and a styrene-isoprene copolymer rubber (SIR).

The diene-based rubber as raw material is preferably a polyisoprene rubber, which is a concept inclusive of a natural rubber (NR) and a synthetic polyisoprene rubber (IR). The polyisoprene rubber inclusive of a natural rubber (NR) and a synthetic polyisoprene rubber (IR) has a large amount of use, and thus a modified polyisoprene rubber produced by using the polyisoprene rubber as a raw material has wide usage and high demand.

The diene-based rubber as raw material preferably has a gel amount of 35 mass% or less, more preferably 25 mass% or less, further more preferably 15 mass% or less. By setting the gel amount of the diene-based rubber used as raw material to 35 mass% or less, it is possible to improve the modification efficiency of the diene-based rubber as raw material due to the modifier.

The diene-based rubber as raw material preferably has a content of a high molecular weight component with a molecular weight of 5,000,000 or more measured with a field flow fractionation (FFF) analyzer of 15 mass% or less, more preferably 10 mass% or less, further more preferably 3 mass% or less. By setting the content of the high molecular weight component with a molecular weight of 5,000,000 or more measured with a field flow fractionation (FFF) analyzer of the diene-based rubber as raw material to 3 mass% or less, in the modification, a load when exerting the mechanical shear force is small, and if more than 15 mass%, the load when exerting the mechanical shear force is large.

Note that the FFF is a technique capable of separating components in a solution depending on their molecular weights via a difference among their diffusion rates, which does not need filter filtration as a pretreatment with respect to the solution as an analysis target such as in GPC. In FFF, the components in the solution are eluted sequentially starting with molecules with low molecular weight and large diffusion rate. Therefore, by using an FFF analyzer instead of GPC, it is possible to analyze soluble components in a range inclusive of components with ultrahigh molecular weight, which are excluded in GPC, without performing filter filtration.

The diene-based rubber as raw material preferably has a Z-average molecular weight (Mz) of 3,500,000 or less, more preferably 3,000,000 or less, and preferably 2,000,000 or more. By setting the Z-average molecular weight (Mz) of the diene-based rubber as raw material to 3,500,000 or less, in the modification, the load when exerting the mechanical shear force is small, and by setting the Z-average molecular weight (Mz) to 2,000,000 or more, it is possible to improve the durability of the generated modified diene-based rubber.

Here, it is preferable that the aforementioned polyisoprene rubber preferable as the diene-based rubber as raw material is a substitute natural rubber. Recently, an ordinarily available natural rubber is obtained from Para rubber tree, and the Para rubber tree grows in the tropics. Hereafter, even if the growth number of Para rubber tree is reduced due to various factors and a natural rubber derived from Para rubber tree becomes difficult to obtain, the modified natural rubber can be produced by using a substitute natural rubber. Here, examples of the substitute natural rubber include a natural rubber derived from guayule and a natural rubber derived from Russian dandelion (Taraxacum kok-saghyz).

The substitute natural rubber is preferably a natural rubber derived from guayule. A natural rubber derived from guayule has a small content of ultrahigh molecular weight components, and thus has excellent processability. Moreover, since it has a small iron content, the heat aging resistance is excellent as well. Therefore, by using a natural rubber derived from guayule, it is possible to produce a modified diene-based rubber with excellent processability and excellent heat aging resistance. Note that in the case where the diene-based rubber as raw material is a natural rubber derived from guayule, from the viewpoint of the processability, the natural rubber derived from guayule preferably has a content of a high molecular weight component with a molecular weight of 5,000,000 or more measured with the aforementioned field flow fractionation (FFF) analyzer of 2 mass% or less, particularly preferably 0 mass%, and from the viewpoint of the heat aging resistance, it preferably has an iron content of 200 mass ppm or less, more preferably 50 mass ppm or less.

In the case where the diene-based rubber as raw material is a natural rubber derived from guayule, from the viewpoint of the processability, the durability such as tensile strength (Tb) and the low hysteresis loss property (tan*δ*), the natural rubber derived from guayule preferably has the aforementioned solvent insoluble content of 1 to 45 mass%, more preferably 3 to 25 mass%, particularly preferably 3 to 15 mass%.

The solvent for dissolving the diene-based rubber as raw material may be a solvent capable of solving at least a part of the diene-based rubber as a modification target. For example, and organic solvent, a mixed solvent of water and an organic solvent, etc. may be used.

The solvent for dissolving the diene-based rubber as raw material is preferably a hydrocarbon. In the case where the solvent is a hydrocarbon, its solubility to diene-based rubber is high, and thus it is possible to improve the modification efficiency of the diene-based rubber as raw material due to the modifier.

Here, examples of the hydrocarbon include n-pentane, isopentane, n-hexane, cyclohexane, benzene, toluene, xylene and ethylbenzene.

Note that the aforementioned guayule contains a large amount of resin together with the rubber component. In order to collect the natural rubber from guayule, after grinding, etc. of the guayule, by using a mixed solvent of a solvent which is a good solvent with respect to rubber and a poor solvent with respect to resin and a solvent which is a good solvent with respect to resin and a poor solvent with respect to rubber, the natural rubber is extracted into a phase composed of the solvent which is a good solvent with respect to rubber and a poor solvent with respect to resin, and the resin component is extracted into a phase composed of the solvent which is a good solvent with respect to resin and a poor solvent with respect to rubber, to thereby obtain the natural rubber derived from guayule via liquid-liquid separation. Here, examples of the solvent which is a good solvent with respect to rubber and a poor solvent with respect to resin include the aforementioned hydrocarbons, among which n-hexane is preferable. On the other hand, examples of the solvent which is a good solvent with respect to resin and a poor solvent with respect to rubber include acetone.

Therefore, in the case where the diene-based rubber as raw material is a natural rubber derived from guayule, it is preferable to select the solvent which is a good solvent with respect to rubber and a poor solvent with respect to resin used in separation of the rubber component and the resin component. In this case, it is possible to improve the entire productivity from collection of the rubber component from guayule to the modification.

The diene-based rubber as raw material preferably has an acetone-extractable content of 15 mass% or less, more preferably 10 mass% or less, further more preferably 5 mass% or less. By setting the acetone-extractable content of the diene-based rubber as raw material to 15 mass% or less, the amount of the resin component in the diene-based rubber as raw material is small, which suppresses a side reaction of the modifier and the resin component, and allows the desired modification reaction of the diene-based rubber as raw material to proceed efficiently. In particular, even in the case where the diene-based rubber as raw material is a natural rubber derived from guayule, if its acetone-extractable content is 15 mass% or less, since the amount of the resin component is small, it is possible to suppress the side reaction of the modifier and the resin component, and to allow the desired modification reaction of the diene-based rubber as raw material to proceed efficiently.

A concentration of the diene-based rubber as raw material in the solution of the diene-based rubber as raw material is not specifically limited, but is preferably within a range of 1 to 60 mass%, more preferably within a range of 15 to 50 mass% at initiation of the modification. By setting the concentration of the diene-based rubber as raw material in the solution of the diene-based rubber as raw material to 1 mass% or more, it is possible to increase of an amount of the diene-based rubber which can be modified per unit time.

A temperature of the modification may be selected as appropriate depending on the types of the diene-based rubber used as raw material and modifier, but is preferably within a range of, e.g., 30°C to 160°C, more preferably within a range of 50°C to 140°C. A temperature within such range is capable of sufficiently removing the solvent while allowing the modification to proceed sufficiently.

The modifier is preferably a modifier unreactive with the solvent, and various modifiers may be used. By using a modifier unreactive with the solvent, it is possible to reduce a ratio of the modifier consumed except in the desired reaction, and to improve the modification efficiency of the diene-based rubber as raw material.

Examples of the modifier include a hydrazide compound, a polar group-containing mercapto compound, a polar group-containing vinyl based monomer, and a polar group-containing olefin. Moreover, it is preferable that additives such as an initiator and a catalyst are selected as appropriate and used depending on the type of the used modifier.

For example, in the case where a hydrazide compound or a polar group-containing mercapto compound is used as the modifier, by adding the hydrazide compound or polar group-containing mercapto compound as the modifier and exerting a mechanical shear force, it is possible to attach the hydrazide compound or polar group-containing mercapto compound to the diene-based rubber as raw material.

Here, examples of the hydrazide compound include isonicotinic acid hydrazide, isophthalic acid dihydrazide, terephthalic acid dihydrazide, azelaic acid dihydrazide, adipic acid dihydrazide, succinic acid dihydrazide, carbodihydrazide, 1,3-bis(hydrazinocarboethyl)-5-isopropylhydantoin, icosanoic acid dihydrazide, 7,11-octadecadiene-1,18-dicarbohydrazide, anthranilic acid hydrazide, salicylic acid hydrazide, 4-hydroxybenzoic acid hydrazide and 2-hydroxy-3-naphthoic acid hydrazide.

Preferable examples of a polar group of the polar group-containing mercapto compound include an amino group, an imino group, a nitrile group, an ammonium group, an imide group, an amide group, a hydrazo group, an azo group, a diazo group, a hydroxyl group, a carboxyl group, a carbonyl group, an epoxy group, an oxycarbonyl group, a nitrogen-containing heterocycle group, an oxygen-containing heterocycle group, an alkoxy silyl group, and a tin-containing group.

Examples of the mercapto compound containing the aforementioned amino group include a mercapto compound having in each molecule at least one amino group selected from a primary, a secondary or a tertiary amino group. Among mercapto compounds having such amino group, a tertiary amino group-containing mercapto compound is particularly preferable.

Here, examples of the primary amino group-containing mercapto compound include 4-mercaptoaniline, 2-mercaptoethylamine, 2-mercaptopropylamine, 3-mercaptopropylamine, 2-mercaptobutylamine, 3-mercaptobutylamine and 4-mercaptobutylamine.

Moreover, examples of the secondary amino group-containing mercapto compound include N-methylaminoethanethiol, N-ethylaminoethanethiol, N-methylaminopropanethiol, N-ethylaminopropanethiol, N-methylaminobutanethiol and N-ethylaminobutanethiol.

Furthermore, examples of the tertiary amino group-containing mercapto compound include an N,N-di(substituted aminoalkyl)mercaptane such as N,N-dimethylaminoethanethiol, N,N-diethylaminoethanethiol, N,N-dimethylaminopropanethiol, N,N-diethylaminopropanethiol, N,N-dimethylaminobutanethiol and N,N-diethylaminobutanethiol.

Among these amino group-containing mercapto compounds, 2-mercaptoethylamine, N,N-dimethylaminoethanethiol, etc. are preferable. These amino group-containing mercapto compounds may be used singly or in a combination of two or more.

Examples of the mercapto compound having a nitrile group include 2-mercaptopropanenitrile, 3-mercaptopropanenitrile, 2-mercaptobutanenitrile, 3-mercaptobutanenitrile and 4-mercaptobutanenitrile. These nitrile group-containing mercapto compounds may be used singly or in a combination of two or more.

Examples of the mercapto compound containing a hydroxyl group include a mercapto compound having in each molecule at least one primary, secondary or tertiary hydroxyl group. Specific examples of the mercapto compound containing a hydroxyl group include 2-mercaptoethanol, 3-mercapto-1-propanol, 3-mercapto-2-propanol, 4-mercapto-1-butanol, 4-mercapto-2-butanol, 3-mercapto-1-butanol, 3-mercapto-2-butanol, 3-mercapto-1-hexanol, 3-mercapto-1,2-propanediol, 2-mercaptobenzyl alcohol, 2-mercaptophenol and 4-mercaptophenol, among which 2-mercaptoethanol, etc. is preferable. These hydroxyl group-containing mercapto compounds may be used singly or in a combination of two or more.

Examples of the mercapto compound containing a carboxyl group include mercaptoacetic acid, mercaptopropionic acid, thiosalicylic acid, mercaptomalonic acid, mercaptosuccinic acid and mercaptobenzoic acid, among which mercaptoacetic acid, etc. is preferable. These carboxyl group-containing mercapto compounds may be used singly or in a combination of two or more.

In the mercapto compound containing a nitrogen-containing heterocycle group, examples of the nitrogen-containing heterocycle group include pyrrole, histidine, imidazole, triazolidine, triazole, triazine, pyridine, pyrimidine, pyrazine, indole, quinoline, purine, phenazine, pteridine and melamine. Note that the nitrogen-containing heterocycle group may contain another hetero atom in its ring.

Here, examples of the mercapto compound containing a pyridyl group as the nitrogen-containing heterocycle group include 2-mercaptopyridine, 3-mercaptopyridine, 4-mercaptopyridine, 5-methyl-2-mercaptopyridine and 5-ethyl-2-mercaptopyridine, and other examples of the mercapto compound containing a nitrogen-containing heterocycle group include 2-mercaptopyrimidine, 2-mercapto-5-methylbenzimidazole, 2-mercapto-1-methylimidazole, 2-mercaptobenzimidazole and 2-mercaptoimidazole, among which 2-mercaptopyridine, 4-mercaptopyridine, etc. are preferable. These nitrogen-containing heterocycle group-containing mercapto compounds may be used singly or in a combination of two or more.

Examples of the mercapto compound containing an alkoxy silyl group include 3-mercaptopropyltrimethoxysilane, 3-mercaptopropyltriethoxysilane, 3-mercaptopropylmethyldimethoxysilane, 3-mercaptopropyldimethylmethoxysilane, 2-mercaptoethyltrimethoxysilane, 2-mercaptoethyltriethoxysilane, mercaptomethylmethyldiethoxysilane and mercaptomethyltrimethoxysilane, among which 3-mercaptopropyltrimethoxysilane, etc. is preferable. These alkoxy silyl group-containing mercapto compounds may be used singly or in a combination of two or more.

Examples of the mercapto compound having a tin-containing group include tin-containing mercapto compounds such as 2-mercaptoethyltri-n-butyltin, 2-mercaptoethyltrimethyltin, 2-mercaptoethyltriphenyltin, 3-mercaptopropyltri-n-butyltin, 3-mercaptopropyltrimethyltin and 3-mercaptopropyltriphenyltin. These tin-containing mercapto compounds may be used singly or in a combination of two or more.

For example, in the case of using a polar group-containing vinyl based monomer as the modifier, it is preferable to use a polymerization initiator, and by adding the polar group-containing vinyl based monomer as the modifier, further adding the polymerization initiator, and exerting a mechanical shear force, it is possible to graft polymerize the polar group-containing vinyl based monomer to the diene-based rubber as raw material.

Here, examples of the polymerization initiator include benzoyl peroxide, hydrogen peroxide, cumene hydroperoxide, tert-butyl hydroperoxide, di-tert-butyl peroxide, 2,2-zaobisisobutyronitrile, 2,2-azobis(2-diaminopropane) hydrochloride, 2,2-azobis(2-diaminopropane) dihydrochloride, 2,2-azobis(2,4-dimethylvaleronitrile), potassium persulfate, sodium persulfate and ammonium persulfate.

Note that in order to lower the polymerization temperature, it is preferable to use a redox based polymerization initiator. Among such redox based polymerization initiators, examples of a reductant combined with a peroxide include tetraethylenepenthamine, mercaptanes, sodium hydrogen sulfite, reducing metal ions and ascorbic acid. Examples of a preferable combination of the peroxide and the reductant in the redox based polymerization initiator include a combination of tert-butyl hydroperoxide and tetraethylenepentamine.

Specific preferable examples of a polar group of the polar group-containing vinyl based monomer include an amino group, an imino group, a nitrile group, an ammonium group, an imide group, an amide group, a hydrazo group, an azo group, a diazo group, a hydroxyl group, a carboxyl group, a carbonyl group, an epoxy group, an oxycarbonyl group, a sulfide group, a disulfide group, a sulfonyl group, a sulfinyl group, a thiocarbonyl group, a nitrogen-containing heterocycle group, an oxygen-containing heterocycle group, an alkoxy silyl group, and a tin-containing group.

Examples of the vinyl based monomer containing an amino group include a vinyl based monomer containing in each molecule at least one amino group selected from a primary, a secondary or a tertiary amino group. Among the vinyl based monomers having an amino group, a tertiary amino group-containing vinyl based monomer such as dialkylaminoalkyl (meth)acrylate is particularly preferable. Here, the "(meth)acrylate" refers to "acrylate" and "methacrylate" (the same hereinafter). These amino group-containing vinyl based monomers may be used singly or in a combination of two or more.

Examples of the primary amino group-containing vinyl based monomer include acrylamide, methacrylamide, 4-vinylaniline, aminomethyl (meth)acrylate, aminoethyl(meth)acrylate, aminopropyl(meth)acrylate and aminobutyl(meth)acrylate.

Moreover, examples of the secondary amino group-containing monomer include: (1) anilinostyrenes such as anilinostyrene, β-phenyl-p-anilinostyrene, β-cyano-p-anilinostyrene, β-cyano-β-methyl-p-anilinostyrene, β-chloro-p-anilinostyrene, β-carboxy-p-anilinostyrene, β-methoxycarbonyl-p-anilinostyrene, β-(2-hydroxyethoxy)carbonyl-p-anilinostyrene, β-formyl-p-anilinostyrene, β-formyl-β-methyl-p-anilinostyrene and α-carboxy-β-carboxy-β-phenyl-p-anilinostyrene, (2) anilinophenylbutadienes such as 1-anilinophenyl-1,3-butadiene, 1-anilinophenyl-3-methyl-1,3-butadiene, 1-anilinophenyl-3-chloro-1,3-butadiene, 3-anilinophenyl-2-methyl-1,3-butadiene, 1-anilinophenyl-2-chloro-1,3-butadiene, 2-anilinophenyl-1,3-butadiene, 2-anilinophenyl-3-methyl-1,3-butadiene and 2-anilinophenyl-3-chloro-1,3-butadiene, and (3) N-monosubstituted (meth)acrylamides such as N-methyl(meth)acrylamide, N-ethyl (meth)acrylamide, N-methylolacrylamide and N-(4-anilinophenyl) methacrylamide. Here, the "(meth)acrylamide" refers to "acrylamide" and "methacrylamide" (the same hereinafter).

Furthermore, examples of the tertiary amino group-containing monomer include acrylic acid or methacrylic acid esters such as N,N-disubstituted aminoalkyl(meth)acrylate and N,N-disubstituted aminoalkyl(meth)acrylamide. Examples of the N,N-disubstituted aminoalkyl(meth)acrylate include N,N-dimethylaminomethyl(meth)acrylate, N,N-dimethylaminoethyl(meth)acrylate, N,N-dimethylaminopropyl (meth)acrylate, N,N-dimethylaminobutyl(meth)acrylate, N,N-diethylaminoethyl(meth)acrylate, N,N-diethylaminopropyl (meth)acrylate, N,N-diethylaminobutyl (meth)acrylate, N-methyl-N-ethylaminoethyl(meth)acrylate, N,N-dipropylaminoethyl (meth)acrylate, N,N-dibutylaminoethyl (meth)acrylate, N,N-dibutylaminopropyl(meth)acrylate, N,N-dibutylaminobutyl (meth)acrylate, N,N-dihexylaminoethyl(meth)acrylate, N,N-dioctylaminoethyl(meth)acrylate and acryloylmorpholine, etc., among which N,N-dimethylaminoethyl(meth)acrylate, N,N-diethylaminoethyl (meth)acrylate, N,N-dipropylaminoethyl(meth)acrylate, N,N-dioctylaminoethyl(meth)acrylate, N-methyl-N-ethylaminoethyl (meth)acrylate, etc. are particularly preferable.

Moreover, examples of the N,N-disubstituted aminoalkyl (meth)acrylamide include an acrylamide compound or methacrylamide compound such as N,N-dimethylaminomethyl(meth)acrylamide, N,N-dimethylaminoethyl(meth)acrylamide, N,N-dimethylaminopropyl (meth)acrylamide, N,N-dimethylaminobutyl(meth)acrylamide, N,N-diethylaminoethyl(meth)acrylamide, N,N-diethylaminopropyl (meth)acrylamide, N,N-diethylaminobutyl(meth)acrylamide, N-methyl-N-ethylaminoethyl(meth)acrylamide, N,N-dipropylaminoethyl (meth)acrylamide, N,N-dibutylaminoethyl(meth)acrylamide, N,N-dibutylaminopropyl(meth)acrylamide, N,N-dibutylaminobutyl (meth)acrylamide, N,N-dihexylaminoethyl(meth)acrylamide, N,N-dihexylaminopropyl(meth)acrylamide and N,N-dioctylaminopropyl (meth)acrylamide, among which N,N-dimethylaminopropyl (meth)acrylamide, N,N-diethylaminopropyl(meth)acrylamide, N,N-dioctylaminopropyl (meth)acrylamide, etc. are particularly preferable.

Examples of the vinyl based monomer containing a nitrile group include acrylonitrile, methacrylonitrile and vinylidene cyanide. These nitrile group-containing vinyl based monomers may be used singly or in a combination of two or more.

Examples of the vinyl based monomer containing a hydroxyl group include a polymerizable monomer having in each molecule at least one primary, secondary or tertiary hydroxyl group.

Here, specific examples of the hydroxyl group-containing vinyl based monomer include: hydroxyalkyl(meth)acrylates such as 2-hydroxyethyl (meth)acrylate, 2-hydroxypropyl(meth)acrylate, 3-hydroxypropyl (meth)acrylate, 2-hydroxybutyl(meth)acrylate, 3-hydroxybutyl (meth)acrylate and 4-hydroxybutyl(meth)acrylate; mono(meth)acrylates of polyalkylene glycols (of which the alkylene glycol unit number is, e.g., 2 to 23) such as polyethylene glycol and polypropylene glycol; hydroxyl group containing unsaturated amides such as N-hydroxymethyl(meth)acrylamide, N-(2-hydroxyethyl)(meth)acrylamide and N,N-bis(2-hydroxymethyl) (meth)acrylamide; and hydroxyl group-containing vinyl aromatic compounds such as o-hydroxystyrene, m-hydroxystyrene, p-hydroxystyrene, o-hydroxy-α-methylstyrene, m-hydroxy-α-methylstyrene, p-hydroxy-α-methylstyrene and p-vinylbenzyl alcohol. Among these, hydroxyalkyl(meth)acrylates and hydroxyl group-containing vinyl aromatic compounds are preferable. These hydroxyl group-containing vinyl based monomers may be used singly or in a combination of two or more.

Examples of the vinyl based monomer containing a carboxyl group include: unsaturated carboxylic acids such as acrylic acid, methacrylic acid, maleic acid, fumaric acid, itaconic acid, tetraconic acid and cinnamic acid; and free carboxyl group-containing esters such as monoesters of non-polymerizable polycarboxylic acids such as phthalic acid, succinic acid, adipic acid, etc. and hydroxyl group containing unsaturated compounds such as allyl alcohol, methallyl alcohol, 2-hydroxyethyl(meth)acrylate, etc., and salts thereof. Among these, unsaturated carboxylic acids are particularly preferable. These carboxyl group-containing vinyl based monomers may be used singly or in a combination of two or more.

Examples of the vinyl based monomer containing an epoxy group include allyl glycidyl ether, methally glycidyl ether, glycidyl(meth)acrylate and 3,4-oxycyclohexyl(meth)acrylate. These epoxy group-containing vinyl based monomers may be used singly or in a combination of two or more.

In the vinyl based monomer containing a nitrogen-containing heterocycle group, examples of the nitrogen-containing heterocycle group include pyrrole, histidine, imidazole, triazolidine, triazole, triazine, pyridine, pyrimidine, pyrazine, indole, quinoline, purine, phenazine, pteridine and melamine. Note that the nitrogen-containing heterocycle group may contain another hetero atom in its cycle.

Here, examples of the monomer containing a pyridyl group as the nitrogen-containing heterocycle group include pyridyl group-containing vinyl compounds such as 2-vinylpyridine, 3-vinylpyridine, 4-vinylpyridine, 5-methyl-2-vinylpyridine, 5-ethyl-2-vinylpyridine, etc., among which 2-vinylpyridine, 4-vinylpyridine, etc. are particularly preferable. These nitrogen-containing heterocycle group-containing vinyl based monomers may be used singly or in a combination of two or more.

Examples of the vinyl based monomer containing an alkoxy silyl group include(meth)acryloxymethyltrimethoxysilane, (meth)acryloxymethylmethyldimethoxysilane, (meth)acryloxymethyldimethylmethoxysilane, (meth)acryloxymethyltriethoxysilane, (meth)acryloxymethylmethyldiethoxysilane, (meth)acryloxymethyldimethylethoxysilane, (meth)acryloxymethyltripropoxysilane, (meth)acryloxymethylmethyldipropoxysilane, (meth)acryloxymethyldimethylpropoxysilane, γ-(meth)acryloxypropyltrimethoxysilane, γ-(meth)acryloxypropylmethyldimethoxysilane, γ-(meth)acryloxypropyldimethylmethoxysilane, γ-(meth)acryloxypropyltriethoxysilane, γ-(meth)acryloxypropylmethyldiethoxysilane, γ-(meth)acryloxypropyldimethylethoxysilane, γ-(meth)acryloxypropyltripropoxysilane, γ-(meth)acryloxypropylmethyldipropoxysilane, γ-(meth)acryloxypropyldimethylpropoxysilane, γ-(meth)acryloxypropylmethyldiphenoxysilane, γ-(meth)acryloxypropyldimethylphenoxysilane, γ-(meth)acryloxypropylmethyldibenzyloxysilane, γ-(meth)acryloxypropyldimethylbenzyloxysilane, trimethoxyvinylsilane, triethoxyvinylsilane, 6-trimethoxysilyl-1,2-hexene and p-trimethoxysilylstyrene. Here, the "(meth)acryloxy" refers to "acryloxy" and "methacryloxy" (the same hereinafter). These alkoxy silyl group-containing vinyl based monomer may be used singly or in a combination of two or more.

Examples of the vinyl based monomer having a tin-containing group include tin-containing monomers such as allyltri-n-butyltin, allyltrimethyltin, allyltriphenyltin, allyltri-n-octyltin, (meth)acryloxy-n-butyltin, (meth)acryloxytrimethyltin, (meth)acryloxytriphenyltin, (meth)acryloxy-n-octyltin, vinyltri-n-butyltin, vinyltrimethyltin, vinyltriphenyltin, vinyltri-n-octyltin, etc. Here, the "(meth)acryloxy" refers to "acryloxy" or "methacryloxy" (the same hereinafter). These tin-containing vinyl based monomers may be used singly or in a combination of two or more.

For example, in the case of using a polar group-containing olefin as the modifier, it is preferable to use a metathesis catalyst. By adding the polar group-containing olefin as the modifier, further adding the metathesis catalyst, and exerting a mechanical shear force, a metathesis reaction occurs between C=C bond portions in the diene-based rubber as raw material and C=C bond portions in the polar group-containing olefin, and it is possible to obtain a modified diene-based rubber having a polar group derived from the polar group-containing olefin.

Here, the metathesis catalyst ordinarily contains a transition metal, where the transition metal constituting the metathesis catalyst is preferably any one of ruthenium, osmium and iridium. Moreover, specific examples of the metathesis catalyst include bis(tricyclohexylphosphine)benzylidene ruthenium dichloride [RuCl₂(=CHPh)(PCy₃)₂], as well as RuCl₂(=CH-CH=CPh₂)(PPh₃)₂, RuCl₂(=CHPh)(PCp₃)₂, RuCl₂(=CHPh)(PPh₃)₂ and RuCl₂(=CHPh)[Cy₂PCH₂CH₂N(CH₃)₃⁺Cl]₂. Note that in the chemical formulae, Cy represents cyclohexyl group, and Cp represents cyclopentyl group.

The polar group-containing olefin may be the aforementioned polar group-containing vinyl based monomer.

As mentioned above, the modifier added into the solution of the diene-based rubber as raw material may be either added into the solution of the diene-based rubber as raw material, by the modifier itself, or added into the solution of the diene-based rubber as raw material, as a modifier solution obtained by dissolving the modifier in a solvent.

Here, the solvent for dissolving the modifier may be a solvent capable of solving at least a part of the modifier. For example, and organic solvent, a mixed solvent of water and an organic solvent, etc. may be used. The solvent used for dissolving the modifier may be either identical to or different from the solvent used for dissolving the diene-based rubber as raw material. Examples of the solvent used for dissolving the modifier include alcohols such as isopropyl alcohol, n-propyl alcohol, etc., and hydrocarbons such as n-pentane, isopentane, n-hexane, cyclohexane, benzene, toluene, xylene, ethylbenzene, etc.

It is preferable that the modification is performed under reduced pressure. By performing the modification under reduced pressure, the solvent can be removed easily.

Moreover, a reaction pressure of the modification may be selected as appropriate depending on a vapor pressure of the selected modifier, etc., but is preferably -200 mmHg to -760 mmHg relative to ordinary pressure. By setting the reaction pressure within this range, it is possible to sufficiently remove the solvent, while sufficiently performing the modification under sufficient existence of the modifier in the reaction system.

The modification preferably has a degree of vacuum upon termination of the modification of 400 mmHg or more, more preferably 600 mmHg or more, and preferably 760 mmHg or less. By setting the degree of vacuum upon termination of the modification to 400 mmHg or more, the removal ratio of the solvent is raised and the load to the apparatus is reduced, which enables usage of an apparatus without high solvent removal capability.

It is preferable that in the modification, deaeration of 25 mass% or more, more preferably 30 mass% or more of the solvent is performed between a time point after expiration of 50% of a total time from initiation of the modification and a time point at which the modification terminates. By performing deaeration of 25 mass% or more of the solvent between the time point after expiration of 50% of the total time from initiation of the modification and the time point at which the modification terminates, it is possible to sufficiently modify the diene-based rubber as raw material due to the modifier under sufficient existence of the solvent, and to improve the modification efficiency of the diene-based rubber as raw material due to the modifier.

It is preferable that a conversion ratio of the modifier at the time point after expiration of 50% of the total time from initiation of the modification is 75% or more. In this case, it is possible to sufficiently modify the diene-based rubber as raw material due to the modifier under sufficient existence of the solvent, and to improve the modification efficiency of the diene-based rubber as raw material due to the modifier.

The modified diene-based rubber generated via the modification preferably has a content of water of 1.5 mass% or less, more preferably 0.8 mass% or less, and preferably has a content of the solvent of 0.5 mass% or less, more preferably 0.1 mass% or less. By setting the content of water to 1.5 mass% or less, and setting the content of the solvent to 0.5 mass% or less, it can be used in production of the rubber composition described below without devolatilization, etc.

The modified diene-based rubber generated via the modification preferably has a content of a portion derived from the modifier of 0.01 to 5 mass%, more preferably 0.02 to 3 mass%, further more preferably 0.03 to 2 mass%. By setting the content of the portion derived from the modifier to 0.01 mass% or more, the affinity with a reinforcing filler of the diene-based rubber as raw material is sufficiently improved, and by setting the same to 5 mass% or less, it is possible to maintain the properties of the diene-based rubber as raw material.

The modified diene-based rubber produced as mentioned above is modified uniformly across the entire rubber, and thus has high affinity with a reinforcing filler. By compounding the modified diene-based rubber to a rubber composition, it is possible to improve the low hysteresis loss property, the durability, etc. of the rubber composition.

### <Rubber composition>

The rubber composition of this disclosure uses the modified diene-based rubber produced with the aforementioned method for producing a modified diene-based rubber. The modified diene-based rubber produced as mentioned above is modified uniformly, and thus has a high affinity with a reinforcing filler. The rubber composition of this disclosure containing such modified diene-based rubber has high dispersibility of a reinforcing filler, and has excellent low hysteresis loss property, durability, etc.

The rubber composition of this disclosure preferably has a content of the modified diene-based rubber of 5 mass% or more, more preferably 10 mass% or more in a rubber component. By containing 5 mass% or more of the modified diene-based rubber in the rubber component, it is possible to further improve the low hysteresis loss property, the durability, etc. of the rubber composition.

Note that in the rubber composition of this disclosure, examples of other rubber components which can be used together with the modified diene-based rubber include ordinary natural rubbers and synthetic diene-based rubbers, where examples of the synthetic diene-based rubber include a styrene-butadiene copolymer rubber (SBR), a polybutadiene rubber (BR) and a synthetic polyisoprene rubber (IR).

It is preferable that the rubber composition of this disclosure further contains a reinforcing filler. Here, examples of the reinforcing filler include carbon black and silica.

A compounding amount of the reinforcing filler is not specifically limited, but is preferably within a range of 5 to 100 parts by mass, more preferably within a range of 10 to 70 parts by mass per 100 parts by mass of the rubber component containing the modified diene-based rubber. By setting the compounding amount of the reinforcing filler to 5 parts by mass or more, the durability is improved, and by setting the same to 100 parts by mass or less, the low hysteresis loss property and the processability are improved.

In addition to the rubber component containing the modified diene-based rubber and the reinforcing filler, an antioxidant, a softener, a silane coupling agent, stearic acid, zinc oxide, a vulcanization accelerator, a vulcanizing agent, etc. may be appropriate selected and compounded to the rubber composition of this disclosure as long as not inhibiting the purpose of this disclosure. Commercially available products may be suitably used as these additives.

The rubber composition can be produced by mixing the rubber component containing at least the modified diene-based rubber with each type of compounding agent selected as appropriate when necessary, and kneading, warming, extruding, etc. the mixture.

Starting with the tire mentioned below, the rubber composition of this disclosure may be used in various rubber products such as anti-vibration rubber, belt, hose and the like.

### <Tire>

The tire of this disclosure uses the aforementioned rubber composition. Since the tire of this disclosure uses the rubber composition, it has excellent low hysteresis loss property and durability. Here, examples of the portions of the tire on which the rubber composition is used include side wall, tread, case member, etc.

Depending on the type of the applied tire, the tire of this disclosure may be obtained via vulcanization after molding by using an unvulcanized rubber composition, or molding by using a half-crosslinked rubber composition (half-vulcanized rubber) subjected to prevulcanization, etc., and then performing regular vulcanization. Here, the tire of this disclosure is preferably a pneumatic tire, and the gas filled in the pneumatic tire may be ordinary air, air with adjusted oxygen partial pressure, or inactive gases such as nitrogen, argon, helium and the like.

### EXAMPLES

In the following, the present disclosure is described in detail with reference to Examples. However, the present disclosure is no way limited to Examples in below.

### <Production Example 1>

Grinded guayule shrub was extracted and separated with an acetone / n-hexane [1/1 (mass ratio)] mixed solution, so as to obtain 6,000 g of a hexane solution containing 10 mass% of a natural rubber derived from guayule. Next, the obtained 6,000 g of the hexane solution containing 10 mass% of the natural rubber derived from guayule and 30 g of a solution obtained by dissolving 3 g of isonicotinic acid hydrazide (I0138, manufactured by Tokyo Chemical Industry Co., Ltd.) in 27 g of isopropyl alcohol were added into a twin screw extruder manufactured by Japan Steel Works, Ltd., and extruded by exerting a mechanical shear force at barrel temperature: 110°C, torque: 68%, screw speed: 30, while drying under reduced pressure, to thereby perform continuous modification reaction and drying, so as to obtain a modified guayule rubber A.

Note that the degree of vacuum upon termination of the modification was 600 mmHg, and at the time point of expiration of 50% of the total time after initiation of the modification, 30 mass% of the solvent remained, and the conversion ratio of isonicotinic acid hydrazide (modifier) at this time point was 80%.

Moreover, the obtained modified guayule rubber A had a content of water of 0.6 mass%, a content of hexane (solvent) of 0.1 mass%, and a content of a portion derived from the modifier of 0.5 mass%.

### <Production Example 2>

By changing formulation of the acetone / hexane mixed solution used in extraction and separation of the grinded guayule shrub, a hexane solution of a guayule derived natural rubber having a gel amount, etc. as indicated in Table 1 was obtained. A modified guayule rubber B was obtained similarly as Production Example 1, except for the used hexane solution of the guayule derived natural rubber.

Note that the degree of vacuum upon termination of the modification was 600 mmHg, and at the time point of expiration of 50% of the total time after initiation of the modification, 30 mass% of the solvent remained, and the conversion ratio of isonicotinic acid hydrazide (modifier) at this time point was 76%.

Moreover, the obtained modified guayule rubber B had a content of water of 0.55 mass%, a content of hexane (solvent) of 0.1 mass%, and a content of a portion derived from the modifier of 0.5 mass%.

### <Production Example 3>

By changing formulation of the acetone / n-hexane mixed solution used in extraction and separation of the grinded guayule shrub, a hexane solution of a guayule derived natural rubber having a gel amount, etc. as indicated in Table 1 was obtained. A modified guayule rubber C was obtained similarly as Production Example 1, except for the used hexane solution of the guayule derived natural rubber.

Note that the degree of vacuum upon termination of the modification was 600 mmHg, and at the time point of expiration of 50% of the total time after initiation of the modification, 30 mass% of the solvent remained, and the conversion ratio of isonicotinic acid hydrazide (modifier) at this time point was 78%.

Moreover, the obtained modified guayule rubber C had a content of water of 0.5 mass%, a content of hexane (solvent) of 0.1 mass%, and a content of a portion derived from the modifier of 0.5 mass%.

### <Production Example 4>

By changing formulation of the acetone / n-hexane mixed solution used in extraction and separation of the grinded guayule shrub, a hexane solution of a guayule derived natural rubber having a gel amount, etc. as indicated in Table 1 was obtained. A modified guayule rubber D was obtained similarly as Production Example 1, except for the used hexane solution of the guayule derived natural rubber.

Note that the degree of vacuum upon termination of the modification was 600 mmHg, and at the time point of expiration of 50% of the total time after initiation of the modification, 30 mass% of the solvent remained, and the conversion ratio of isonicotinic acid hydrazide (modifier) at this time point was 74%.

Moreover, the obtained modified guayule rubber D had a content of water of 0.56 mass%, a content of hexane (solvent) of 0.1 mass%, and a content of a portion derived from the modifier of 0.5 mass%.

### <Production Example 5>

By changing formulation of the acetone / n-hexane mixed solution used in extraction and separation of the grinded guayule shrub, a hexane solution of a guayule derived natural rubber having a gel amount, etc. as indicated in Table 1 was obtained. A modified guayule rubber E was obtained similarly as Production Example 1, except for the used hexane solution of the guayule derived natural rubber.

Note that the degree of vacuum upon termination of the modification was 600 mmHg, and at the time point of expiration of 50% of the total time after initiation of the modification, 30 mass% of the solvent remained, and the conversion ratio of isonicotinic acid hydrazide (modifier) at this time point was 76%.

Moreover, the obtained modified guayule rubber E had a content of water of 0.6 mass%, a content of hexane (solvent) of 0.1 mass%, and a content of a portion derived from the modifier of 0.5 mass%.

### <Production Example 6>

A modified guayule rubber F was obtained similarly as Production Example 1, except that the addition amount of the isonicotinic acid hydrazide was changed.

Note that the degree of vacuum upon termination of the modification was 600 mmHg, and at the time point of expiration of 50% of the total time after initiation of the modification, 30 mass% of the solvent remained, and the conversion ratio of isonicotinic acid hydrazide (modifier) at this time point was 75%.

Moreover, the obtained modified guayule rubber F had a content of water of 0.6 mass%, a content of hexane (solvent) of 0.1 mass%, and a content of a portion derived from the modifier of 0.08 mass%.

### <Production Example 7>

A modified guayule rubber G was obtained similarly as Production Example 1, except that 30 g of an N,N-diethylaminoethyl methacrylate (M0082, manufactured by Tokyo Chemical Industry Co., Ltd.) / isopropyl alcohol solution with a concentration of 10 mass%, 12 g of a tert-butyl hydroperoxide (t-BHPO) (B3153, manufactured by Tokyo Chemical Industry Co., Ltd.) / isopropyl alcohol solution with a concentration of 10 mass%, and 12 g of a tetraethylenepentamine (TEPA) (T0098, manufactured by Tokyo Chemical Industry Co., Ltd.) / isopropyl alcohol solution with a concentration of 10 mass% were used instead of isonicotinic acid hydrazide.

Note that the degree of vacuum upon termination of the modification was 600 mmHg, and at the time point of expiration of 50% of the total time after initiation of the modification, 30 mass% of the solvent remained, and the conversion ratio of N,N-diethylaminoethyl methacrylate (modifier) at this time point was 85%.

Moreover, the obtained modified guayule rubber G had a content of water of 0.6 mass%, a content of hexane (solvent) of 0.1 mass%, and a content of a portion derived from the modifier of 0.5 mass%.

### <Production Example 8>

A modified guayule rubber H was obtained similarly as Production Example 7, except that 17 g of a 4-vinylpyridine (Y0025, manufactured by Tokyo Chemical Industry Co., Ltd.) / isopropyl alcohol solution with a concentration of 10 mass% was used instead of 30 g of the N,N-diethylaminoethyl methacrylate / isopropyl alcohol solution.

Note that the degree of vacuum upon termination of the modification was 600 mmHg, and at the time point of expiration of 50% of the total time after initiation of the modification, 30 mass% of the solvent remained, and the conversion ratio of 4-vinylpyridine (modifier) at this time point was 77%.

Moreover, the obtained modified guayule rubber H had a content of water of 0.6 mass%, a content of hexane (solvent) of 0.1 mass%, and a content of a portion derived from the modifier of 0.28 mass%.

### <Production Example 9>

A modified guayule rubber I was obtained similarly as Production Example 1, except that 2-mercaptoethanol (M0058, manufactured by Tokyo Chemical Industry Co., Ltd.) was used instead of isonicotinic acid hydrazide.

Note that the degree of vacuum upon termination of the modification was 600 mmHg, and at the time point of expiration of 50% of the total time after initiation of the modification, 30 mass% of the solvent remained, and the conversion ratio of 2-mercaptoethanol (modifier) at this time point was 80%.

Moreover, the obtained modified guayule rubber I had a content of water of 0.6 mass%, a content of hexane (solvent) of 0.1 mass%, and a content of a portion derived from the modifier of 0.22 mass%.

### <Production Example 10>

A modified guayule rubber J was obtained similarly as Production Example 7, except that 3.0 g of bis(tricyclohexylphosphine)benzylidene ruthenium dichloride was used as the metathesis catalyst instead of tert-butyl hydroperoxide (t-BHPO) and tetraethylenepentamine (TEPA).

Note that the degree of vacuum upon termination of the modification was 600 mmHg, and at the time point of expiration of 50% of the total time after initiation of the modification, 30 mass% of the solvent remained, and the conversion ratio of N,N-diethylaminoethyl methacrylate (modifier) at this time point was 82%.

Moreover, the obtained modified guayule rubber J had a content of water of 0.6 mass%, a content of hexane (solvent) of 0.1 mass%, and a content of a portion derived from the modifier of 0.5 mass%.

### <Production Example 11>

A modified natural rubber A was obtained similarly as Production Example 1, except that 6,000 g of a natural rubber solution obtained by dissolving 600 g of a coagulated natural rubber in 5,400 g of hexane was used instead of the guayule rubber cement (the hexane solution of the guayule derived natural rubber).

Note that the degree of vacuum upon termination of the modification was 610 mmHg, and at the time point of expiration of 50% of the total time after initiation of the modification, 80 mass% of the solvent remained, and the conversion ratio of the isonicotinic acid hydrazide (modifier) at this time point was 46%.

Moreover, the obtained modified natural rubber A had a content of water of 0.5 mass%, a content of hexane (solvent) of 0.1 mass%, and a content of a portion derived from the modifier of 0.5 mass%.

### <Production Example 12>

A modified natural rubber B was obtained similarly as Production Example 11, except that 30 g of an N,N-diethylaminoethyl methacrylate / isopropyl alcohol solution with a concentration of 10 mass%, 12 g of a tert-butyl hydroperoxide (t-BHPO) / isopropyl alcohol solution with a concentration of 10 mass% and 12 g of a tetraethylenepentamine (TEPA) / isopropyl alcohol solution with a concentration of 10 mass% were used instead of isonicotinic acid hydrazide.

Note that the degree of vacuum upon termination of the modification was 620 mmHg, and at the time point of expiration of 50% of the total time after initiation of the modification, 80 mass% of the solvent remained, and the conversion ratio of N,N-diethylaminoethyl methacrylate (modifier) at this time point was 48%.

Moreover, the obtained modified natural rubber B had a content of water of 0.5 mass%, a content of hexane (solvent) of 0.1 mass%, and a content of a portion derived from the modifier of 0.28 mass%.

### <Comparative Production Example 1>

A guayule rubber was obtained similarly as Production Example 1, except that isonicotinic acid hydrazide was not added.

### <Comparative Production Example 2>

600 g of a guayule rubber obtained by drying for two hours with an oven at 100°C the hexane solution containing the natural rubber derived from guayule as described in Production Example 1 and 3.0 g of isonicotinic acid hydrazide (10138, manufactured by Tokyo Chemical Industry Co., Ltd.) were added into a twin screw extruder manufactured by Japan Steel Works, Ltd., and extruded by exerting a mechanical shear force at barrel temperature: 110°C, torque: 68%, screw speed: 30 at ordinary pressure, to thereby perform the modification reaction, so as to obtain a modified guayule rubber K.

The obtained modified guayule rubber K had a content of water of 0.01 mass%, a content of hexane (solvent) of 0.05 mass%, and a content of a portion derived from the modifier of 0.4 mass%.

### <Analysis of diene-based rubber as raw material>

Regarding each Production Example or comparative Production Example using a hexane solution containing a natural rubber derived from guayule, the hexane solution containing the natural rubber derived from guayule was dried for two hours at 100°C with an oven, so as to collect the natural rubber derived from guayule, and a component insoluble to the solvent, a gel amount, a Z-average molecular weight (Mz), a content of high molecular weight component with a molecular weight of 5,000,000 or more obtained with an FFF analyzer, and an acetone-extractable content of the natural rubber derived from guayule used as a diene-based rubber raw material were measured with the following methods.

Moreover, regarding each Production Example or comparative Production Example using a coagulated natural rubber, a component insoluble to the solvent, a gel amount, a Z-average molecular weight (Mz), a content of high molecular weight component with a molecular weight of 5,000,000 or more obtained with an FFF analyzer, and an acetone-extractable content of the coagulated natural rubber were measured with the following methods. The result was as indicated in Table 1.

### (1) Component insoluble to solvent

The natural rubber derived from guayule or coagulated natural rubber was dissolved in toluene (solvent), and the insoluble component was collected via filtration, weighed and indicated in terms of percentage.

### (2) Gel amount

The natural rubber derived from guayule or coagulated natural rubber was swelled with toluene for 12 hours, then treated with a centrifuge at 35,000 rpm for 1.5 hours, and the precipitated gel was left standing and dried for 48 hours, and weighed so as to determine the gel amount.

### (3) Z-average molecular weight (Mz)

The Z-average molecular weight (Mz) in terms of polystyrene of the natural rubber derived from guayule or coagulated natural rubber was determined via gel permeation chromatography [GPC: HLC-8020, manufactured by Tosoh Corporation, column: GMH-XL (2 in series), manufactured by Tosoh Corporation, detector: differential refractometer (RI)] with respect to monodisperse polystyrene.

### (4) Content of high molecular weight component with molecular weight of 5,000,000 or more obtained with FFF analyzer

The natural rubber derived from guayule or coagulated natural rubber was dissolved in tetrahydrofuran (THF), so as to prepare a THF solution with a concentration of the modified guayule rubber or coagulated natural rubber of 0.4 mass%, and the THF solution was separated into a soluble component and an insoluble component in the solution via centrifugation at a centrifugal acceleration of 150,000 G. Next, a supernatant liquid containing the soluble component was collected, diluted 2 times with THF, and its content of high molecular weight component with a molecular weight of 5,000,000 or more was measured with an FFF analyzer as a molecular weight fractionation device, and an MALS detector as a molecular weight and branching detector.

### (5) Acetone-extractable content

The natural rubber derived from guayule or coagulated natural rubber was immersed in acetone, and the insoluble component was collected via filtration and weighed, so as to calculate the acetone-extractable content from a mass reduction ratio.

**[Table 1]**

| | Product | Diene-based rubber as raw material | | | | | Modifier | | t-BHPO (g) | TEPA (g) | Bis(tricyclohexyl phosphine) benzylidene ruthenium dichloride (g) |
|---|---|---|---|---|---|---|---|---|---|---|---|
| | | Component insoluble to solvent (mass%) | Gel amount (mass%) | Z-average molecular weight | Content of high molecular weight component with molecular weight of 5,000,000 or more obtained with FFF analyzer (mass%) | Acetone-extractable content (mass%) | Type | Addition amount (g) | | | |
| Production Example 1 | Modified guayule rubber A | 14.4 | 12 | 30×10⁵ | 0 | 5 | Isonicotinic acid hydrazide | 3.0 | - | - | - |
| Production Example 2 | Modified guayule rubber B | 24.0 | 20 | 30×10⁵ | 0 | 5 | Isonicotinic acid hydrazide | 3.0 | - | - | - |
| Production Example 3 | Modified guayule rubber C | 22.0 | 20 | 22×10⁵ | 2 | 5 | Isonicotinic acid hydrazide | 3.0 | - | - | - |
| Production Example 4 | Modified guayule rubber D | 24.0 | 20 | 22×10⁵ | 0 | 5 | Isonicotinic acid hydrazide | 3.0 | - | - | - |
| Production Example 5 | Modified guayule rubber E | 13.2 | 12 | 30×10⁵ | 0 | 10 | Isonicotinic acid hydrazide | 3.0 | - | - | - |
| Production Example 6 | Modified guayule rubber F | 14.4 | 12 | 30×10⁵ | 0 | 5 | Isonicotinic acid hydrazide | 0.5 | - | - | - |
| Production Example 7 | Modified guayule rubber G | 14.4 | 12 | 30×10⁵ | 0 | 5 | N,N-diethylaminoethyl methacrylate | 3.0 | 1.2 | 1.2 | - |
| Production Example 8 | Modified guayule rubber H | 14.4 | 12 | 30×10⁵ | 0 | 5 | 4-vinylpyridine | 1.7 | 1.2 | 1.2 | - |
| Production Example 9 | Modified guayule rubber I | 14.4 | 12 | 30×10⁵ | 0 | 5 | 2-mercaptoethanol | 1.3 | - | - | - |
| Production Example 10 | Modified guayule rubber J | 14.4 | 12 | 30×10⁵ | 0 | 5 | N,N-diethylaminoethyl methacrylate | 3.0 | - | - | 3.0 |
| Production Example 11 | Modified natural rubber A | 40.8 | 34 | 31×10⁵ | 14 | - | Isonicotinic acid hydrazide | 3.0 | - | - | - |
| Production Example 12 | Modified natural rubber B | 40.8 | 34 | 31×10⁵ | 14 | - | N,N-diethylaminoethyl methacrylate | 3.0 | 1.2 | 1.2 | - |
| Comparative Production Example 1 | Guayule rubber | 14.4 | 12 | 30×10⁵ | 0 | 5 | - | - | - | - | - |
| Comparative Production Example 2 | Modified guayule rubber K | 14.4 | 12 | 30×10⁵ | 0 | 5 | Isonicotinic acid hydrazide | 3.0 | - | - | - |

As compared to Comparative Production Example 2 in which the drying and the modification were performed separately, Production Examples 1 to 12 performed drying during the modification, which reduced the number of process.

Next, by using the aforementioned modified guayule rubbers, modified natural rubbers and guayule rubbers, rubber compositions having the formulations as indicated in Table 2 were prepared, and a Mooney viscosity (ML₁₊₄, 130°C), a tensile strength (Tb) and a low hysteresis loss property (tan*δ*) of the rubber compositions were measured with the following methods. The result was as indicated in Table 3.

### (6) Mooney viscosity ML₁₊₄ (130°C)

The Mooney viscosity ML₁₊₄ (130°C) of the rubber compositions at 130°C was measured according to JIS K6300-1994, where the examples and comparative examples applying Formulation 1 were indexed with the Mooney viscosity of Comparative Example 1 as 100, and the examples and comparative examples applying Formulation 2 were indexed with the Mooney viscosity of Comparative Example 3 as 100. A smaller index value indicates lower Mooney viscosity and better processability.

### (7) Tensile strength (Tb)

With respect to vulcanized rubbers obtained by vulcanizing the aforementioned rubber compositions at 145°C for 33 minutes, a tensile test was performed according to JIS K6301-1995 in order to measure the tensile strength (Tb), where the examples and the comparative examples applying Formulation 1 were indexed with the Tb of Comparative Example 1 as 100, and the examples and the comparative examples applying Formulation 2 were indexed with the Tb of Comparative Example 3 as 100. A larger index value indicates larger tensile strength and better durability.

### (8) Low hysteresis loss property (tanδ)

With respect to vulcanized rubbers obtained by vulcanizing the aforementioned rubber compositions at 145°C for 33 minutes, the loss tangent (tan*δ*) was measured by using a viscoelasticity meter [manufactured by Rheometrics Inc.] at temperature: 50°C, strain: 5% and frequency: 15 Hz, where the examples and the comparative examples applying Formulation 1 were indexed with the tan*δ* of Comparative Example 1 as 100, and the examples and the comparative examples applying Formulation 2 were indexed with the tan*δ* of Comparative Example 3 as 100. A smaller index value indicates smaller tan*δ* and better low hysteresis loss property.

**[Table 2]**

| | Compounding amount (parts by mass) | |
|---|---|---|
| | Formulation 1 | Formulation 2 |
| Rubber component *1 | 100 | 100 |
| Carbon black N339 | 50 | - |
| Silica *2 | - | 55 |
| Silane coupling agent *3 | - | 5.5 |
| Aromatic oil | 5 | 10 |
| Stearic acid | 2 | 2 |
| Antioxidant 6C *4 | 1 | 1 |
| Zinc oxide | 3 | 3 |
| Vulcanization accelerator DZ *5 | 0.8 | - |
| Vulcanization accelerator DPG *6 | - | 1 |
| Vulcanization accelerator DM *7 | - | 1 |
| Vulcanization accelerator NS *8 | - | 1 |
| Sulfur | 1 | 1.5 |

| | | |
|---|---|---|
| *1 The types of the used rubber components are as indicated in Table 3. *2 "Nipsil AQ", manufactured by Nippon Silica Industrial Co., Ltd. *3 "Si69", bis(3-triethoxysilylpropyl)tetrasulfide, manufactured by Degussa AG *4 N-(1,3-dimethylbutyl)-N'-phenyl-p-phenylenediamine *5 N,N'-dicyclohexyl-2-benzothiazolylsulfenamide *6 Diphenyl guanidine *7 Dibenzothiazyl disulfide *8 N-t-butyl-2-benzothiazylsulfenamide | | |

**[Table 3]**

| | Formulation | Rubber component | Mooney viscosity ML₁₊₄ (130°C) (index) | Tb (index) | tan*δ* (index) |
|---|---|---|---|---|---|
| Example 1 | | Modified guayule rubber A | 76 | 115 | 70 |
| Example 2 | | Modified guayule rubber B | 80 | 110 | 74 |
| Example 3 | | Modified guayule rubber C | 83 | 105 | 79 |
| Example 4 | | Modified guayule rubber D | 85 | 106 | 77 |
| Example 5 | | Modified guayule rubber E | 76 | 107 | 80 |
| Example 6 | | Modified guayule rubber F | 73 | 114 | 75 |
| Example 7 | Formulation 1 | Modified guayule rubber G | 68 | 114 | 65 |
| Example 8 | | Modified guayule rubber H | 70 | 111 | 73 |
| Example 9 | | Modified guayule rubber I | 71 | 110 | 80 |
| Example 10 | | Modified guayule rubber J | 70 | 112 | 68 |
| Example 11 | | Modified natural rubber A | 92 | 130 | 85 |
| Example 12 | | Modified natural rubber B | 90 | 128 | 82 |
| Comparative Example 1 | | Guayule rubber | 100 | 100 | 100 |
| Comparative Example 2 | | Modified guayule rubber K | 88 | 105 | 90 |
| Example 13 | | Modified guayule rubber A | 88 | 112 | 80 |
| Example 14 | | Modified guayule rubber B | 90 | 106 | 83 |
| Example 15 | | Modified guayule rubber C | 92 | 103 | 87 |
| Example 16 | | Modified guayule rubber D | 94 | 105 | 86 |
| Example 17 | | Modified guayule rubber E | 83 | 109 | 87 |
| Example 18 | | Modified guayule rubber F | 83 | 112 | 85 |
| Example 19 | Formulation 2 | Modified guayule rubber G | 79 | 111 | 75 |
| Example 20 | | Modified guayule rubber H | 82 | 107 | 77 |
| Example 21 | | Modified guayule rubber I | 83 | 107 | 75 |
| Example 22 | | Modified guayule rubber J | 81 | 110 | 77 |
| Example 23 | | Modified natural rubber A | 98 | 125 | 90 |
| Example 24 | | Modified natural rubber B | 98 | 124 | 90 |
| Comparative Example 3 | | Guayule rubber | 100 | 100 | 100 |
| Comparative Example 4 | | Modified guayule rubber K | 94 | 105 | 95 |

From Table 3, it is understood that by using the modified diene-based rubbers produced according to this disclosure, the low hysteresis loss property and the durability of the rubber composition are improved.

### INDUSTRIAL APPLICABILITY

The rubber composition of this disclosure can be applied to tires and other rubber products. Moreover, the modified diene-based rubber produced with the method for producing a modified diene-based rubber of this disclosure can be applied in preparation of such rubber composition. Further, the tire of this disclosure can be applied as tires for various vehicles.

### REFERENCE SIGNS LIST

1 twin screw extruder
2 screw
3, 3a, 3b barrel
4 injection line of solution of diene-based rubber as raw material
5 injection line of modifier
45 injection line of mixture of solution of diene-based rubber as raw material and modifier
6 outlet of modified diene-based rubber
7 solvent devolatilizing line
8 vacuum pump

## Claims

1. A method for producing a modified diene-based rubber comprising:
performing modification by adding a modifier into a solution of a diene-based rubber as raw material obtained by dissolving a diene-based rubber as raw material in a solvent, and removing the solvent and reacting the modifier with the diene-based rubber as raw material while exerting a mechanical shear force, to thereby generate a modified diene-based rubber.

2. The method for producing a modified diene-based rubber according to claim 1, wherein:
the diene-based rubber as raw material has a gel amount of 35 mass% or less.

3. The method for producing a modified diene-based rubber according to claim 1 or 2, wherein:
the diene-based rubber as raw material has a content of a high molecular weight component with a molecular weight of 5,000,000 or more measured with a field flow fractionation (FFF) analyzer of 15 mass% or less.

4. The method for producing a modified diene-based rubber according to any one of claims 1 to 3, wherein:
the diene-based rubber as raw material has a Z-average molecular weight, Mz, of 3,500,000 or less.

5. The method for producing a modified diene-based rubber according to any one of claims 1 to 4, wherein:
the diene-based rubber as raw material contains an acetone-extractable content of 15 mass% or less.

6. The method for producing a modified diene-based rubber according to any one of claims 1 to 5, wherein:
the solvent is a hydrocarbon.

7. The method for producing a modified diene-based rubber according to any one of claims 1 to 6, wherein:
in the modification, a degree of vacuum upon termination of the modification is 400 mmHg or more.

8. The method for producing a modified diene-based rubber according to any one of claims 1 to 7, wherein:
in the modification, deaeration of 25 mass% or more of the solvent is performed between a time point after expiration of 50% of a total time from initiation of the modification and a time point at which the modification terminates.

9. The method for producing a modified diene-based rubber according to claim 8, wherein:
a conversion ratio of the modifier at the time point after expiration of 50% of the total time from initiation of the modification is 75% or more.

10. The method for producing a modified diene-based rubber according to any one of claims 1 to 9, wherein:
the modified diene-based rubber has a content of water of 1.5 mass% or less and a content of the solvent of 0.5 mass% or less.

11. The method for producing a modified diene-based rubber according to any one of claims 1 to 10, wherein:
the modified diene-based rubber has a content of a portion derived from the modifier of 0.01 to 5 mass%.

12. The method for producing a modified diene-based rubber according to any one of claims 1 to 11, wherein:
the diene-based rubber as raw material is a polyisoprene rubber.

13. The method for producing a modified diene-based rubber according to claim 12, wherein:
the polyisoprene rubber is a substitute natural rubber.

14. The method for producing a modified diene-based rubber according to claim 13, wherein:
the substitute natural rubber is a natural rubber derived from guayule.

15. The method for producing a modified diene-based rubber according to any one of claims 1 to 14, wherein:
the modifier is a modifier unreactive with the solvent.

16. A rubber composition using a modified diene-based rubber produced with the method according to any one of claims 1 to 15.

17. A tire using the rubber composition according to claim 16.
